# EUROPÄISCHE PATENTSCHRIFT

(11) **EP 0 832 706 B1**
(45) Veröffentlichungstag und Bekanntmachung des Hinweises auf die Patenterteilung: **12.04.2000**
(21) Anmeldenummer: 97116013.0
(22) Anmeldetag: 15.09.1997
(51) Int. Cl.: B22D 17/26

(54) **Druckgiessmaschine**
Die-casting machine
Machine à coulée sous pression

(30) Priorität: 24.09.1996 DE 19639053
(43) Veröffentlichungstag der Anmeldung: 01.04.1998
(73) Patentinhaber: DaimlerChrysler AG, 70567 Stuttgart (DE)
(72) Erfinder: Söll, Guido, 73660 Urbach (DE); Fussnegger, Wolfgang, 72074 Tübingen (DE)

(56) Entgegenhaltungen:
- DE-A- 3 931 194
- DE-A- 4 236 061
- DE-A- 4 243 735

## Beschreibung

Die Erfindung geht aus von einer Druckgießmaschine nach dem Oberbegriff von Anspruch 1, wie sie beispielsweise aus einem Beitrag von W. Bovensmann "Neuzeitliche Druckgießmaschinen für präzise, großvolumige Druckgußteile" in der Zeitschrift Gießerei-Praxis, Nr. 7/1966, Seiten 115 bis 119 als bekannt hervorgeht.

In dieser Literaturstelle aus dem Jahre 1966 ist zwar nur das Druckgießen erwähnt und näher beschrieben, jedoch kommen neuerdings auch andere, artverwandte Gießverfahren in Betracht. In diesem Zusammenhang sei ein Druckgießen bei evakuierter Druckgußform und das Thixocasting sowie das Thixoforming genannt. Generell handelt es sich hierbei um Urformverfahren, bei denen eine auf die Werkstückgröße abgestimmte Metallmenge in ein öffen- und schließbares Formgebungswerkzeug aus Metall eingebracht, die Form mit dem fließfähigen Leichtmetall gefüllt und unter der Einwirkung eines hohen Druckes ausgeformt und das Werkstück anschließend unter der Einwirkung dieses Druckes bis zur Handhabbarkeit des Werkstückes erstarren gelassen und aus der Form entnommen wird. Alle unter diese Definition subsumierbaren Formgebungsverfahren seien hier mit dem Begriff "Druckgießen" erfaßt. In diesem Zusammenhang kann beispielsweise auch auf die Sonderausgabe der Zeitschriften ATZ und MTZ aus dem Jahre 1996 zum Thema "Leichtmetalle im Automobilbau" mit Beiträgen von B. Wendiger, A. Mundl: Thixocasting - Eine Umformtechnik mit Zukunft" oder G. Springe: "Die Zukunft des Aluminiumeinsatzes im Automobilbau" verwiesen werden.

Die bekannten Druckgießmaschinen sind im Prinzip wie eine liegende Presse gebaut mit zwei gegenüberliegenden, vertikal stehenden Aufspannplaten, von denen die eine ortsfest und die andere hubbeweglich antreibbar ist. Die bewegliche Aufspannplatte ist mittels vier Führungssäulen parallel zur ortsfest gehaltenen Aufspannplatte geführt. Auf den einander zugekehrten Seiten der Auf spannplatten sind jeweils die Teile des Druckgußwerkzeuges aufgespannt, die entlang einer vertikalen Formteilungsebene geteilt sind. Diese Anordnung ist wegen einer stehenden Gießlage erforderlich; die Form soll sich in Schwerkraftrichtung aufsteigend füllen.

Während des Gusses und der anschließenden Erstarrung wird - wie gesagt - eine hoher Druck auf die Schmelze ausgeübt, der die Teile des Druckgußwerkzeuges auseinander zu treiben trachtet. Die Höhe dieser Spreizkraft ergibt sich aus der Höhe des Drukkes und der Projektionsfläche der metallbenetzten Flächen des Druckgußwerkzeuges. Das Druckgußwerkzeug muß mit einer deutlich höheren Kraft im Schließzustand gehalten werden, damit sich die Werkzeugteile nicht - auch nicht ansatzweise - öffnen und sich an den Rändern nicht etwa ein Gießgrat bilden kann. Die erforderlichen Schließkräfte werden über die Führungssäulen und die Aufspannplatten auf die Teile des Druckgußwerkzeuges übertragen, wobei auf die bewegliche Aufspannplatte ein Hydraulikzylinder im Schließsinn einwirkt, der sich seinerseits an einem Querhaut abstützt, welches über die Führungssäulen starr mit der ortsfesten Aufspannplatte verbunden ist.

Bei den bekannten Druckgußmaschinen sind der prozeßsicher gießbaren Größe der Gußstücke durch die Elastizität der Aufspannplatten natürliche Grenzen gesetzt. Unter der Last der über die Führungssäulen an der ortsfesten Aufspannplatte randseitig angreifenden Schließkräfte einerseits und der im wesentlichen mittig an ihr wirkenden Druckkräfte des Druckgußwerkzeuges andererseits kommt es aufgrund des Hook'schen Gesetzes zu einer geringen aber dennoch unvermeidbaren Verformung der Aufspannplatten und der von ihnen getragenen Druckgußwerkzeuge. Mit zunehmender Größe der Druckgußwerkzeuge nehmen nicht nur die wirksamen Kräfte, und zwar diese mit der zweiten Potenz der Linearabmessung zu, sondern es nehmen auch die Durchbiegungen zu, und zwar mit der dritten Potenz der Linearabmessung. Bei 10% Vergrößerung des lichten Abstandes zwischen den Führungssäulen und 10% Vergrößerung der Seitenlänge des Druckgußteiles sind bei sonst vergleichbaren Bedingungen die auftretenden Kräfte um etwa 21% größer und die Durchbiegungen - bei 100% der Kräfte - um etwa 33% größer und bei 121% der Kräfte etwa um die Summe dieser Zuwächse, also um etwa 54% größer. Bei 20% Vergrößerung der Linearabmessung einer Druckgußmaschiene steigen die Durchbiegungen bei sonst vergleichbaren Bedingungen etwa auf das Doppelte. Zwar kann die Durchbiegung durch geeignete Versteifungsmaßnahmen an den Aufspannplatten kompensiert werden, jedoch greifen diese Maßnahmen nur zum Teil, weil sich die Naturgesetze, d.h. hier das Hook'sche Gesetz, durch konstruktive Maßnahmen nicht außer Kraft setzen lassen. Ein Rest von Durchbiegung bleibt immer übrig und es geht allenfalls darum, ob das Ausmaß der Durchbiegung tolerierbar ist oder nicht. Ab einer bestimmten Spannweite zwischen den Führungssäulen helfen selbst Versteifungsmaßnahmen nicht mehr, um die Durchbiegung der Aufspannplatten in erträglichen Grenzen zu halten. Zumindest bei dieser Größe von Druckgießmaschinen ist - bedingt durch die Baustoffelastizität - eine natürliche Grenze für die Werkstückgröße erreicht.

Aufgabe der Erfindung ist es, die gattungsgemäß zugrundegelegte Druckgießmaschine dahingehend zu verbessern, daß über die aufgezeigten, elastizitätsbedingten Grenzen einer Gußstückgröße hinaus Druckgußteile prozeßsicher, d.h. bei nur geringen und ohne weiteres tolerierbaren elastischen Verformungen der Maschinen- und Werkzeugteile nach dem Druckgußverfahren gegossen werden können.

Diese Aufgabe wird - ausgehend von der gattungsgemäß zugrundegelegten Druckgießmaschine - erfindungsgemäß durch die kennzeichnenden Merkmale von Anspruch 1 gelöst. Danach wird der Kraftflußkreis zum Zusammenhalten der Teile des Druckgußwerkzeuges innerhalb des Druckgußwerkzeuges kurzgeschlossen, so daß die Aufspannplatten durch die Schließkräfte gar nicht mehr belastet werden. Die Steifigkeit der Aufspannplatten kommt steifigkeitsmäßig den auf sie aufgespannten Werkzeugteilen voll zugute. Die werkzeug-integrierten Zuganker zum Zusammenhalten der Druckgußwerkzeuge können hinsichtlich ihrer Lage und ihres gegenseitigen Abstandes werkstück-individuell an das jeweilige Druckgußteil angepaßt werden, so daß sich optimal kurze Biegelängen zwischen ihnen ergeben. Vor allem ist es auch möglich, einen oder mehrere Zuganker im Inneren der Umrißkontur des Druckgußteiles zu placieren, nämlich dann, wenn - wie meist-das Druckgußteil offene Stellen nach Art eines fensterartigen Durchbruches, eines Rahmen-Faches o.dgl. aufweist.

Die Erfindung bietet nicht nur Vorteile im Hinblick auf ein prozeßsicheres Herstellen von bisher nicht beherrschbaren Groß-Druckgußteilen, sondern kann mit Vorteil auch bei Druckgußmaschinen herkömmlicher Größe eingesetzt werden, weil nämlich derartige Maschinen leichter und somit kostengünstiger gebaut werden können.

Um die Fließwege der Schmelze innerhalb großer Druckgußwerkzeuge auf Strecken beschränken zu können, die von der in kleine Tröpfchen zerstiebten Schmelze ohne zu starke Abkühlung zurücklegbar sind, können in zweckmäßiger Ausgestaltung der Erfindung mehrere Gießzylinder zum Einspeisen von Gußwerkstoff in die Gießform an ihr verteilt vorgesehen sein, über die simultan von mehreren Stellen aus die Gießform mit Schmelze befüllbar ist.

Weitere zweckmäßige Ausgestaltungen der Erfindung können den Unteransprüchen entnommen werden; im übrigen ist die Erfindung anhand mehrerer in den Zeichnungen dargestellter Ausführungsbeispiele nachfolgend noch erläutert; dabei zeigen:
- Fig. 1: einen Teil-Querschnitt durch eine Druckgießmaschine mit mehreren darin angeordneten, gleichzeitig befüllbaren Druckgußwerkzeugen,
- Fig. 2: eine Ansicht auf ein großes Werkstück in einer Druckgießmaschine, dessen Gießform von mehreren Einspeisstellen aus befüllbar ist,
- Fig. 3 und 4: eine Seitenansicht auf ein weiteres Ausführungsbeispiel eines in einer Druckgießmaschine befindlichen Druckgußwerkzeuges mit einer Verriegelung der Werkzeughälften durch eine Schieberplatte (Figur 3) bzw. eine perspektivische Darstellung der Schieberplatte alleine (Figur 4),
- Fig. 5: eine Seitenansicht auf ein weiteres Ausführungsbeispiel eines Druckgußwerkzeuges mit einer gegenseitigen Sicherung der Werkzeughälften durch Zuganker, die in der beweglichen Werkzeughälfte - bei diesem Ausführungsbeispiel - durch einschiebbare Keile verriegelbar sind,
- Fig. 6: eine Seitenansicht auf ein weiteres Ausführungsbeispiel eines Druckgußwerkzeuges ähnlich wie Figur 5, wobei hier die Zuganker durch eine Schieberleiste mit schlüsselloch-ähnlichen Durchbrüchen verriegelbar sind,
- Fig. 7: eine teilweise Draufsicht auf das Druckgußwerkzeug nach Figur 6,
- Fig. 8: eine Seitenansicht auf ein weiteres Ausführungsbeispiel eines Druckgußwerkzeuges ähnlich wie Figur 5, mit Verriegelung der Zuganker nach Art eines Bajonettverschlusses und
- Fig. 9: eine perspektivische Einzeldarstellung von oberem Zugankerende und Verriegelungsring der Zugankerverriegelung nach Figur 8.

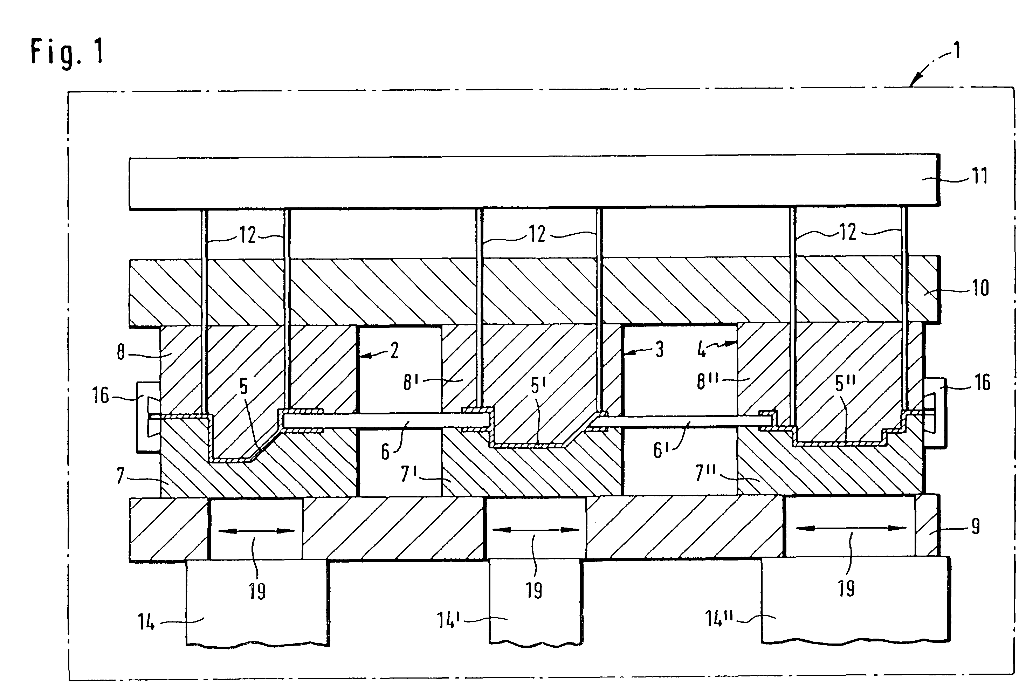

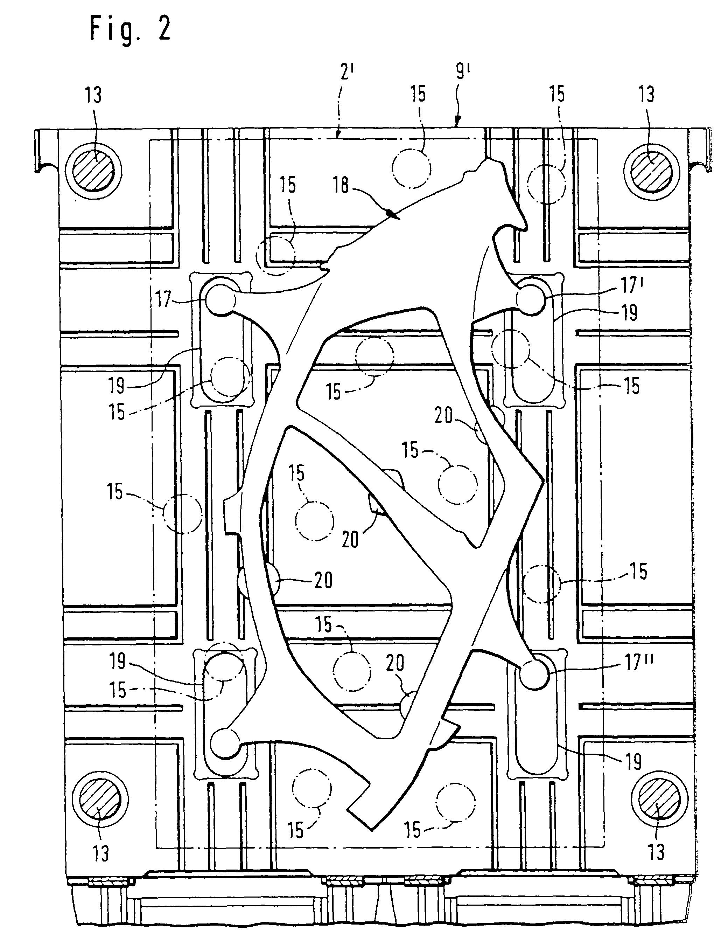

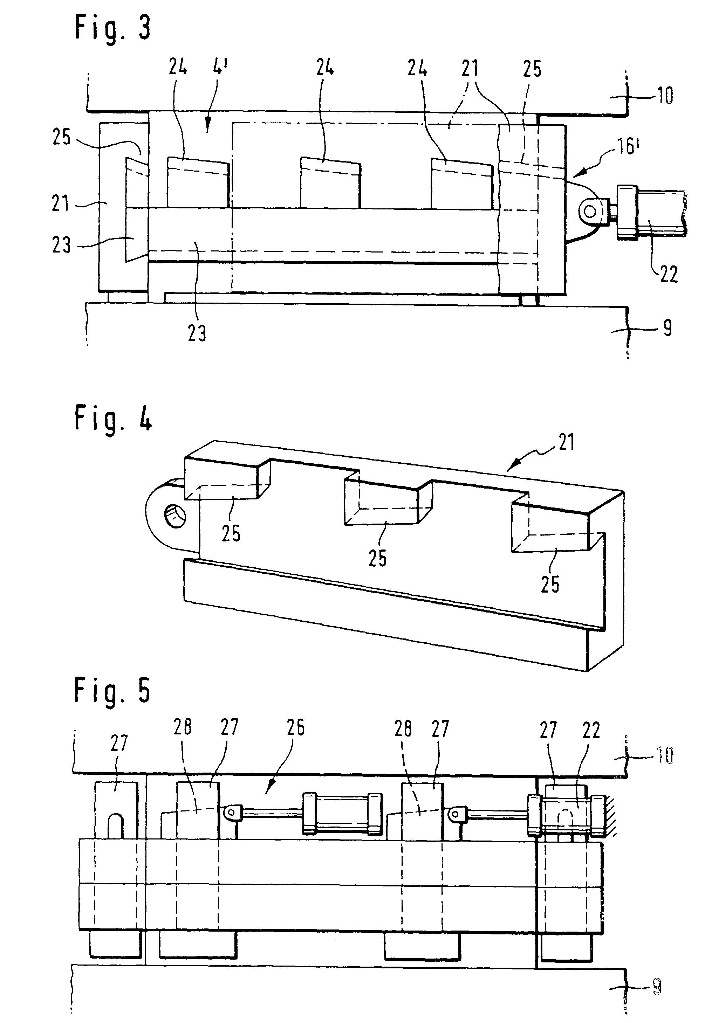

Es sei zunächst an Hand von Figur 1 oder von Figur 2 auf den Aufbau einer Druckgießmaschine mit darin angeordneten Druckgußwerkzeugen eingegangen; z.T. gilt die Beschreibung auch für den Aufbau nach den Figur 3, 5, 6 oder Figur 8. Die Druckgießmaschinen - in Figur 1 mit einer strichpunktierten Umrißlinie 1 für die Druckgießmaschine angedeutet - enthalten eine ortsfeste Aufspannplatte 9 bzw 9', die zwar auch horizontal angeordnet sein können, die jedoch - abweichend von den Darstellungen in den Figuren 1, 3, 5 oder 8 - meist wie in Figur 2 vertikal angeordnet sind. Beim Ausführungsbeispiel nach Figur 1 sind auf der ortsfesten Aufspannplatte 9 die ortsfesten Werkzeugteile 7, 7' oder 7" von drei Druckgußwerkzeugen 2, 3 bzw. 4 befestigt. Bei dem in Figur 2 gezeigten Ausführungsbeispiel ist auf die ortsfeste Aufspannplatte 9' der ortsfeste Werkzeugteil eines großen einheitlichen Druckgußwerkzeuges 2' aufgespannt. Übereinstimmend weisen die Ausführungsbeispiele nach den Figuren 1 und 2 mehrere Gießzylinder 14, 14' bzw. 14" (bei Figur 1) bzw 17, 17' oder 17" (bei Figur 2) zum Einspeisen von Gußwerkstoff in die Gießform auf, die verteilt auf der Aufspannplatte vorgesehen sind. Über diese Gießzylinder kann Schmelze von mehreren Stellen aus simultan in die Gießform gefüllt werden, so daß sich trotz der großen Werkstückabmessungen kurze Füll- und Fließwege ergeben. Entsprechend der mehreren Gußteil-Bereiche sind auch mehrere Überlaufstellen 20 am Druckgußwerkzeug vorgesehen. Zur Anpassung an örtliche Gegebenheiten und Größenverhältnisse des Werkstückes sind die Gießzylinder in einem Langloch 19 parallel zur Aufspannplatte 9 bzw. 9' verfahrbar und in eine jeweiligen Bedarfsposition justierbar und dort fixierbar.

Gegenüberliegend zu der ortsfesten Aufspannplatte 9 bzw. 9' ist eine bewegliche Aufspannplatte 10 angeordnet, die entlang von Führungssäulen 13 paralle verfahrbar und mit einem entsprechenden Bewegungsantrieb (nicht dargestellt) versehen ist. Die bewegliche Aufspannplatte trägt die beweglichen Werkzeugteile 8, 8' bzw. 8" der drei Druckgußwerkzeuge 2, 3 und 4 des Ausführungsbeispieles nach Figur 1. In Figur 2 ist die bewegliche Aufspannplatte nicht gezeigt. Hinter der beweglichen Aufspannplatte 10 ist eine gesondert bewegliche und geführte Auswerferplatte 11 angeordnet, von der schlanke Auswerferstifte 12 durch die Aufspannplatte 10 und den beweglichen Werkzeugteil 8, 8', 8" bis zum Werkstück hindurchragen. Bedarfsweise können solche Auswerferplatten und Auswerferstifft auch auf der Seite der feststehenden Werkzeugteile vorgesehen sein.

Bei der Ausführung der Druckgießmaschine nach Figur 1 mit drei Druckgußwerkzeugen 2, 3 und 4 können drei Gußwerkstücke 5, 5' und 5" simultan gegossen werden. Die Besonderheit der Darstellung nach Figur 1 liegt nun darin, daß die drei genannten Werkstücke nicht - was an sich das nächstliegende wäre - als separate Einzelwerkstücke gegossen werden sollen, sondern daß sie durch Zusammengießen mit Einlegeteilen 6 und 6' zu einem einheitlichen großen Werkstück vereinigt werden sollen. Bei den Einlegeteilen 6 und 6' kann es sich um Gußstücke aus dem gleichen Werkstoff oder um Blech-Ziehteile aus Stahlblech oder aus Aluminiumblech handeln. Bei der Darstellung nach Figur 2 wird noch ein Schritt weitergegangen; hier wird ein großes Werkstück 18, beispielsweise ein komplettes Seitenwandteil einer Fahrzeugkarosserie, als einheitliches Werkstück gegossen. Das Seitenwandteil enthält die beiden Türausschnitte und die Anschlüsse bzw. Knotenelemente zu angrenzenden Trägern der Fahrzeugkarosserie. Unten bzw. oben sind im Seitenwandteil der Boden- bzw. Dachschweller angeordnet. Nach vorne ist der Fahrertürausschnitt durch den Seitenholm der Windschutzscheibe und die Anschlagsäule für die Fahrertür, die sog. A-Säule begrenzt. Zwischen den beiden Türen liegt der Mittelpfosten, die sog. B-Säule; und der hintere Türauschnitt ist nach hinten durch die Radeinfassung und die sog. C-Säule begrenzt. Auf dieses innenseitige Strukturbauteil von komplizierter, aber gießtechnisch einfach herstellbarer Form wird bei der Fertigung der Rohbaukarosserie eine Außenbeplankung aus gezogenem Blech, vorzugsweise ein Leichtmetallblech aufgeschweißt, so daß eine stabile, aus Hohlprofilen gebildete Seitenwandkonstruktion entsteht, deren Außenschale der Außenhautform der Karosserie entspricht und die in ihrer Oberflächenform hohen optischen Ansprüchen gerecht wird.

Wie eingangs bereits erwähnt, bereitet es große Schwierigkeiten, so große Druckgußwerkstücke als einheitliches Werkstück herzustellen. Um die beim Füllen und bei der Werkstückerstarrung seitens der unter hohem Druck stehenden Schmelze auf die Werkzeugteile 7/8, 7'/8' bzw. 7"/8" einwirkenden Sprengkräfte prozeßsicher beherrschen zu können, sind die von einander lösbaren Werkzeugteile vor und während des Gusses unmittelbar formschlüssig und in belastbarer Weise miteinander verbunden, derart, daß die Zuhaltekräfte in einem innerhalb des Druckgußwerkzeuges verbleibenden Kraftflußkreis übertragbar sind. Dieser Gedanke ist nicht nur auf Druckgießmaschinen für große Werkstücke, sondern vorteilhaft auch solche für herkömmlich beherrschbare Werkstücke anwendbar. Und zwar können dann solche Druckgießmaschine leichter und kostengünstiger gestaltet werden.

Zur unmittelbaren formschlüssigen Koppelung der Werkzeughälften sind in einer Gruppe von Ausführungsbeispielen (Figuren 2, 5, 6 oder 8) am oder im Druckgußwerkzeug Zuganker 15, 27, 27', 27" integriert, die sich dies und jenseits der Formteilungsfläche des Druckgußwerkzeuges erstrecken und die die Zuhaltekräfte in einem innerhalb des Druckgußwerkzeuges verbleibenden Kraftflußkreis übertragen. Die Zuganker sind bei den in den Figuren 5, 6 und 8 dargestellten Ausführungsbeispielen über einen Kopf festhaftend im ortsfesten Werkzeugteil verankert und im Schließzustand des Druckgußwerkzeuges am gegenüberliegenden, beweglichen Werkzeugteil zugfest aber lösbar verankert, wobei die lösbare Verankerung unterschiedlich ausgebildet ist. Zum Öffnen der Werkzeugteile wird diese Verankerung gelöst. In anderen Ausführungsbeispielen der Druckgußwerkzeuge (Figuren 1 oder 3) sind an ihm Verriegelungen 16, 16' anderer Art angebracht.

Beim Ausführungsbeispiel nach den Figuren 1 oder 3 umfaßt die Verriegelung 16 bzw. 16' eine im Querschnitt trapezförmig ausgebildeten Halteleiste, die außenseitig am orstfesten Werkzeugteil angebracht und aus dem Vollen herausgearbeitet ist; sie verläuft entlang der gesamten zu verriegelnden Seite des Druckgußwerkzeuges 2, 3, 4 bzw. 4'. Diese Halteleiste sei wegen ihres - hälftigen - Schwalbenschwanzprofiles Schwalbenschwanzleiste 23 genannt. Am gegenüberliegenden beweglichen Werkzeugteil sind mehrere im Querschnitt spiegelbildlich zur Schwalbenschwanzleiste geformte Schwalbenschwanzklauen 24 angebracht, deren nach oben weisenden Flanken keilförmig gegen die Verschieberichtung geneigt sind. Über beide, d.h. über die Schwalbenschwanzleiste 23 und die Reihe von Schwalbenschwanzklauen 24 ist eine Schieberplatte 21 - Einzeldarstellung von der Innenseite aus siehe Figur 4 - geschoben, die unterseitig mit einer durchgehenden Leiste die Schwalbenschwanzleiste umgreift und die oberseitig einzelne, an die Schwalbenschwanzklauen angepaßte Gegenklauen 25 aufweist, deren gegenseitiger lichter Abstand größer ist als die Breite der Schwalbenschwanzklauen 24. Die Schieberplatte 21 ist mittels des hydraulisch oder pneumatisch beaufschlagbaren Verriegelungszylinders 22 zwischen zwei Endstellungen hin und her verschiebbar. Das Gehäuse des Verriegelungszylinders 22 ist ortsfest gehalten. In der in Figur 3 dargestellten Offenstellung werden die Schwalbenschwanzklauen 24 durch die Zwischenräume zwischen den Gegenklauen 25 freigegeben, so daß das obere Werkzeugteil behinderungsfrei vom unteren Werkzeugteil abgehoben werden kann. In der entgegengesetzten, in Figur 3 links liegenden Endstellung, der Schließstellung, werden die werkzeugseitigen Schwalbenschwanzklauen 24 von den Gegenklauen 25 übergriffen und aufgrund einer entsprechenden Verschiebekraft der Schieberplatte 21 und der Neigung der sich berührenden Flanken gegen die Verschieberichtung mit hoher Vorspannung festgehalten. Das Druckgußwerkzeug wird dadurch mit hoher Kraft zusammengehalten, wobei der dem Innendruck in der Gießform entgegenwirkende Kraftfluß innerhalb des Druckgußwerkzeuges verbleibt.

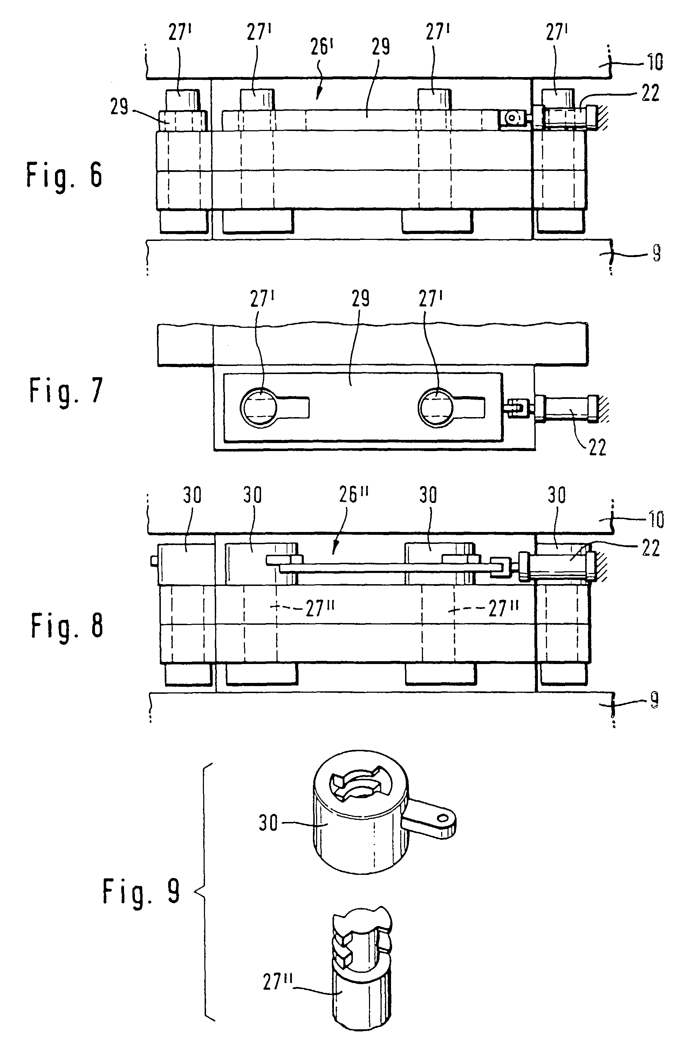

Bei dem Ausführungsbeispiel nach Figur 2 sind zum formschlüssigen Zusammenhalten der beiden Werkzeughälften des Druckgußwerkzeuges 2' mehrere strichpunktiert angedeutete Zuganker 15 verteilt angeordnet. Diese Zuganker sind nicht nur um die Außenkontur des Werkstückes 18 herum im Druckgußwerkzeug angeordnet, sondern auch innerhalb offener Bereiche des Werkstückes, beispielsweise innerhalb der Öffnungen für die Türen. Aufgrund der zahlreichen, bei geringen gegenseitigen Abständen verteilt angeordneten Zuganker ergeben sich kurze Biegestrecken der Werkzeugteile zwischen den Zugankern, so daß das Druckgußwerkzeug trotz seiner Größe auch gegen hohe Schmelzendrücke sicher geschlossen gehalten werden kann. Die Art der Verankerung des lösbaren Endes der Zuganker in dem entsprechenden Werkzeugteil ist hier nicht dargestellt. Zweckmäßig erscheint eine Verankerung mittels eines Verriegelungsringes nach Art der Darstellung in Figur 9. Wegen der großen Zahl und der unregelmäßigen Lage von Zugankern bzw. Verriegelungsringen erscheint hier jedoch zweckmäßig, einen zentralen Verdrehantrieb für alle erforderlichen Verriegelungsringe vorzusehen. Beispielsweise können alle Verriegelungsringe an ihrem Außenumfang als Kettenrad ausgebildet oder mit einem solchen verbunden sein und mittels Antriebsketten untereinander antriebsmäßig gekoppelt sein. Durch einen einzigen an einer der Antriebsketten angreifenden Verriegelungszylinder können dann sämtliche Verriegelungsringe zugleich verdreht und alle Zuganker so simultan verankert bzw. wieder gelöst werden.

Beim Ausführungsbeispiel nach Figur 5 ist zur Verankerung des oberen Endes der Zuganker 27 in dem beweglichen Werkzeugteil des Druckgußwerkzeuges 26 eine Verriegelung mittels eines schmalen Verriegelungkeiles 28 vorgesehen, der in einen entsprechenden axial verlaufenden Schlitz oder Langloch im Zuganker so weit einschiebbar ist, daß er auf der gegenüberliegenden Umfangsseite des Zugankers wieder austritt. Der Verriegelungkeil stützt sich auf der Unterseite auf einer druckbelastbaren Führungsfläche des oberen Werkzeugteiles ab, wogegen die obere Begrenzungsfläche des Keiles und des entsprechenden Langloches im Zuganker gegen die Verschieberichtung geneigt sind. Durch ein Einschieben des Keiles 28 in den Zuganker hinein mittels einer bestimmten, durch den Verriegelungszylinder 22 aufgebrachten Kraft kann die Verriegelung des Zugankers mit einer bestimmten Vorspannkraft erfolgen, so daß das Druckgußwerkzeug mit dieser Vorspannkraft der Zuganker zusammengehalten werden kann.

Auch beim Ausführungsbeispiel nach den Figuren 6 und 7 sind zur formschlüssigen, unmittelbaren Verklammerung der Werkzeughälften des Druckgußwerkzeuges 26' Zuganker 27' vorgesehen. Zur lösbaren Verankerung der freien Zugankerenden in dem beweglichen Werkzeugteil sind im Bereich der überstehenden Enden der Zuganker zwei gegenüberliegende Einkerbungen eingearbeitet, die einen etwa rechteckigen tragenden Querschnitt des Zugankers übriglassen. Der Zuganker 27' ist verdrehgesichert in einer solchen Umfangsstellung in das Druckgußwerkzeug eingebaut, daß die lange Seite des rechteckigen Querschnittes parallel zur Verschieberichtung der Leiste 29 liegt. Zumindest die obere Begrenzung der Einkerbungen ist senkrecht zur Zugankerachse angeordnet, so daß der rechteckige Querschnitt zwischen den Einkerbungen in einen rechtwinklig abgesetzten "Kopf" übergeht, der dem Schaftquerschnitt des Zugankers entspricht. Die untere Begrenzungsfläche dieses "Kopfes" ist gegen die Verschieberichtung der Verriegelungsleiste 29 keilförmig geneigt, was zeichnerisch jedoch nicht dargestellt ist. Die "Köpfe" der Zuganker können durch die Verriegelungsleiste 29 hintergriffen werden, die für jeden Zuganker einen schlüsselloch-ähnlichen Durchbruch aufweist, dessen runder Durchbruchsteil den "Kopf" des Zungankers behinderungsfrei hindurchtreten läßt, wogegen der anschließende schmalere, rechteckige Durchbruchsteil den "Kopf" formschlüssig hintergreift. Die Oberseite der Verriegelungsleiste ist beiderseits des rechteckigen Durchbruchsteils ebenfalls gegen die Verschieberichtung keilförmig geneigt ausgebildet. Dadurch ergibt sich zusammen mit der entsprechenden Neigung der Kopfunterseite die Möglichkeit, den Kopf mit hoher Vorspannung zu hinterfassen, wenn die Verriegelungsleiste mit hoher Kraft durch den Verriegelungszylinder 22 in Richtung auf die Zuganker 27' verschoben wird. Selbstverständlich stützt sich die Verriegelungsleiste belastbar auf einer Führungsfläche des oberen Werkzeugteiles ab, so daß die Vorspannkraft und die beim Druckgießen auftretende Sprengkraft über diese Führungsfläche in das obere Werkzeugteil übertragen werden können.

Auch für die unmittelbare formschlüssige Verklammerung der Werkzeugteile des Druckgußwerkzeuges 26" nach den Figuren 8 und 9 sind Zuganker 27" vorgesehen. Bei diesen wird die lösbare Verankerung der freien Enden im oberen Werkzeugteil mit Hilfe je eines Verriegelungsringes 30 bewerkstelligt. Diese Verriegelungsringe sind beim dargestellten Beispiel über einen radial abragenden Hebel und eine daran angelenkte Stange von dem Verriegelungszylinder 22 aus um etwa 90° hin- und herschwenkbar. Innenseitig sind die Verriegelungsringe auf bestimmtem Umfangssektoren mit einer gewindeartigen Profilierung versehen, wogegen in dazwischen liegenden Umfangssektoren die Verriegelungsringe innenseitig glattflächig und entsprechend der Umfangskontur des Schaftteiles der Zuganker 27" gestaltet sind. In analoger Weise sind auch die Enden der Zuganker auf bestimmten Umfangssektoren mit einer Profilierung eines passenden Außengewindes versehen und in dazwischen liegenden Umfangssektoren glattflächig entsprechend dem Kerndurchmesser des Außengewindes gestaltet. Die Unterseite des Verriegelungsringes stützt sich wie eine große Mutter auf einer Führungsfläche ab, über die die Vorspannung der Verankerung und die Betriebskräfte in das bewegliche Werkzeugteil abgeleitet werden können. Beim Schließen oder Öffnen des Druckgußwerkzeuges sind die Verriegelungsringe relativ zu den verdrehfest eingebauten Zugankern jeweils in eine solche Umfangslage geschwenkt, daß die profilierten Bereiche des Ringes und die des Zugankers gegenseitig auf Lücke liegen und demgemäß die Zuganker mit ihrem freien Ende behinderungsfrei durch die Verriegelungsringe hindurchgleiten können. Zum Zusammenschließen der beiden Werkzeughälften werden die Verriegelungsringe um etwa 90° in die Verriegelungsstellung relativ zu den Zugankern verdreht, so daß die ring- und bolzenseitigen gewindeartigen Profilierungen in gegenseitigen Eingriff kommen und die Verriegelungsringe unter Vorspannung an ihrer Führungsfläche anliegen. Auf die Werkzeugteile seitens der Schmelze einwirkende Spreizkräfte können dann unmittelbar zwischen den Werkzeugteilen in einem innerhalb des Druckgußwerkzeuges verbleibenden Kraftflußkreislaufes aufgefangen werden, ohne daß diese Kräfte auch andere, außerhalb des Druckgußwerkzeuges liegende Bauteile der Druckgießmaschiene belasten.

Im Zusammenhang mit den dargestellten Ausführungsbeispiel seien noch verschiedene kinematische Abwandlungen erwähnt: Zum einen ist es selbstverständlich bei allen Beispielen möglich, daß die Zuganker mit ihrem festsitzenden Ende im beweglichen Werkzeugteil und die Verriegelungen am ortsfesten Werkzeugteil angeordnet sind. Bei der Zuganker-Verriegelung nach den Figuren 8 und 9 ist es darüber hinaus möglich, die Innenform der Verriegelungsringe unbeweglich in dem zugehörigen Werkzeugteil zu integrieren und die Zuganker drehbar in dem zugehörigen Werkzeugteil zu lagern und dort mit einem entsprechenden Verdrehantrieb auszurüsten. Der Verdrehantrieb der Verriegelungsringe oder der Zuganker kann - wie schon im Zusammenhang mit dem Ausführungsbeispiel nach Figur 2 erwähnt - auch zentral für alle oder eine größere Gruppe von Verriegelungen über einen Umschlingungstrieb mittels Antriebsketten von einem Verriegelungszylinder aus erfolgen.

## Patentansprüche

1. Druckgießmaschine mit einem teilbaren Druckgußwerkzeug und einer Vorrichtung zum Öffnen und Schließen des Druckgußwerkzeuges sowie mit einer Vorrichtung zum Zusammenpressen der voneinander lösbaren Werkzeugteile während des Gießvorganges entgegen der seitens der druckbeaufschlagten Schmelze auf sie einwirkenden Spreizkräfte,
**gekennzeichnet durch** eine unmittelbar-gegenseitige, öffen- und schließbare, formschlüssige Verklammerung der voneinander lösbaren Werkzeugteile des Druckgußwerkzeuges (2, 2', 26, 26', 26"), die die den Spreizkräften entgegenwirkenden Zuhaltekräfte in einem innerhalb des Druckgußwerkzeuges (2, 2', 26, 26', 26") verbleibenden Kraftflußkreis überträgt.

2. Druckgießmaschine nach Anspruch 1,
**dadurch gekennzeichnet,**
daß die Verklammerung durch am oder im Druckgußwerkzeug (2, 2', 26, 26', 26") integrierte Zuganker (27, 27', 27") gebildet ist, wobei die Zuganker (27, 27', 27") im Schließzustand des Druckgußwerkzeuges (2, 2', 26, 26', 26") dies und jenseits seiner Formteilungsfläche im Druckgußwerkzeug (2, 2', 26, 26', 26") zugfest verankerbar und zum Öffnen zumindest aus einem der Werkzeugteile des Druckgußwerkzeuges (2, 2', 26, 26', 26") lösbar sind.

3. Druckgießmaschine nach Anspruch 1,
**dadurch gekennzeichnet,**
daß die Verklammerung durch außenseitige Verriegelungen (16, 16') der Druckgußwerkzeug (2, 2', 26, 26', 26") gebildet ist, die im Schließzustand des Druckgußwerkzeuges (2, 2', 26, 26', 26") die Formteilungsfläche des Druckgußwerkzeuges (2, 2', 26, 26', 26") übergreifen und in beiden Werkzeugteilen zugfest verankerbar und zum Öffnen zumindest aus einem der Werkzeugteile des Druckgußwerkzeuges (2, 2', 26, 26', 26") lösbar sind.

4. Druckgießmaschine nach Anspruch 1,
**dadurch gekennzeichnet,**
daß mehrere Gießzylinder (14, 14', 14", 17, 17', 17") zum Einspeisen von Gußwerkstoff in die Gießform an ihr verteilt vorgesehen sind, über die simultan von mehreren Stellen aus die Gießform befüllbar ist.

5. Druckgießmaschine nach Anspruch 1,
**dadurch gekennzeichnet,**
daß mehrere Druckgußwerkzeuge (2, 3, 4) nebeneinander in einer Druckgießmaschine (1) angeordnet sind und jedem Druckgußwerkzeug (2, 3, 4) jeweils ein gesonderter Gießzylinder (14, 14', 14") zum Einspeisen von Gußwerkstoff in die jeweils zugehörige Gießform zugeordnet ist, derart, daß die Gießformen der mehreren Druckgußwerkzeuge (2, 3, 4) simultan befüllbar sind.

6. Druckgießmaschine nach Anspruch 4 oder 5,
**dadurch gekennzeichnet,**
daß die mehreren Gießzylinder (14, 14', 14", 17, 17', 17") in ihrer Position parallel zur Teilungsebene der Werkzeughälften des teilbaren Druckgußwerkzeuges (2, 2', 26, 26', 26") bzw. der Druckgußwerkzeuge (2, 3, 4) jeweils zumindest in einer Verstellrichtung (19) verstellbar gehaltert und in der jeweiligen Justierposition fixierbar sind.

## Claims

1. Pressure die-casting machine with a split pressure die-casting die, a device to open and close the pressure die-casting die, and a device which, during the casting process, presses together the portions of the die that can be separated, against the spreading forces acting upon them from the pressurised melt,
**characterised in that**
the components of the pressure die-casting die (2, 2', 26, 26', 26") that can be separated are clamped against one another in a form-closing way that can be opened and closed, such that the holding forces that counteract the spreading forces are transferred in a force flow cycle which remains within the pressure die-casting die (2, 2', 26, 26', 26").

2. Pressure die-casting machine according to Claim 1,
**characterised in that**
the clamping is effected by tension posts (27, 27', 27") integrated on or in the pressure die-casting die (2, 2', 26, 26', 26"), such that in the closed condition of the pressure die-casting die (2, 2', 26, 26', 26") the tension posts (27, 27', 27") can be anchored against tension in and either side of the parting plane in the pressure die-casting die (2, 2', 26; 26', 26"), and to allow opening, can be removed from at least one part of the pressure die-casting die (2, 2', 26, 26', 26").

3. Pressure die-casting machine according to Claim 1,
**characterised in that**
the clamping is effected by catches (16, 16') on the outside of the pressure die-casting die (2, 2', 26, 26', 26"), which, when the pressure die-casting die (2, 2', 26, 26', 26") is closed, span across the parting plane of the pressure die-casting die (2, 2', 26, 26', 26") and can be anchored against tension in both parts of the die, and to allow opening, can be removed from at least one part of the pressure die-casting die (2, 2', 26, 26', 26").

4. Pressure die-casting machine according to Claim 1,
**characterised in that**
several casting cylinders (14, 14', 14", 17, 17', 17") for feeding the cast material are provided in and distributed over the casting mould, through which the casting mould cavity can be filled simultaneously from several places.

5. Pressure die-casting machine according to Claim 1,
**characterised in that**
several pressure die-casting dies (2, 3, 4) are arranged next to one another in a pressure die-casting machine (1), and to each pressure die-casting die (2, 3, 4) is assigned a separate casting cylinder (14, 14', 14") for feeding cast material into the respective associated casting mould cavity, such that the casting mould cavities of the several pressure die-casting dies (2, 3, 4) can be filled simultaneously.

6. Pressure die-casting machine according to Claims 4 or 5,
**characterised in that**
the several casting cylinders (14, 14', 14", 17, 17', 17") can be fixed in their positions parallel to the parting plane of the die halves of the split pressure die-casting die (2, 2', 26, 26', 26") or of the pressure die-casting dies (2, 3, 4), each being held so as to be adjustable in at least one adjustment direction (19) and being fixed in its respective adjusted position.

## Revendications

1. Machine de coulée sous pression comprenant un outil de coulée sous pression divisible et un dispositif pour ouvrir et fermer l'outil de coulée sous pression, ainsi qu'un dispositif pour presser l'une contre l'autre les parties d'outil séparables l'une de l'autre pendant l'opération de coulée, à l'encontre des forces d'écartement exercées par la matière fondue chargée par une pression et qui agissent sur ces parties, caractérisée par un cramponnage par sûreté de forme, directement réciproque et pouvant être ouvert et refermé, des parties séparables l'une de l'autre de l'outil de coulée sous pression (2, 2', 26, 26', 26"), qui transmet les forces de maintien à l'état fermé agissant à l'encontre des forces d'écartement dans un circuit de flux de force qui reste à l'intérieur de l'outil de coulée sous pression (2, 2', 26, 26', 26").

2. Machine de coulée sous pression selon la revendication 1, caractérisée en ce que le cramponnage est formé par des tirants d'ancrage (27, 27', 27") intégrés sur ou dans l'outil de coulée sous pression (2, 2', 26, 26', 26"), les tirants d'ancrage (27, 27', 27") pouvant, dans l'état de fermeture de l'outil de coulée sous pression (2, 2', 26, 26', 26"), être ancrés de façon résistante à la traction de part et d'autre de la surface de division du moule, à l'intérieur de l'outil de coulée sous pression (2, 2', 26, 26', 26"), tandis que, pour l'ouverture, ils peuvent être libérés d'au moins une des parties d'outil de l'outil de coulée sous pression (2, 2', 26, 26', 26").

3. Machine de coulée sous pression selon la revendication 1, caractérisée en ce que le cramponnage est formé par des verrouillages extérieurs (16, 16') de l'outil de coulée sous pression (2, 2', 26, 26', 26") qui, à l'état fermé de l'outil de coulée sous pression (2, 2', 26, 26', 26"), sont à recouvrement par rapport à la surface de division du moule de l'outil de coulée sous pression (2, 2', 26, 26', 26") et peuvent être ancrés de façon résistante à la traction dans les deux parties d'outil, tandis que, pour l'ouverture, ils peuvent être libérés d'au moins une des parties d'outil de coulée sous pression (2, 2', 26, 26', 26").

4. Machine de coulée sous pression selon la revendication 1, caractérisée en ce que plusieurs cylindres de coulée (14, 14', 14", 17, 17', 17") destinés à l'introduction de la matière à couler dans le moule de coulée sont répartis sur l'étendue de ce moule et au moyen de ces cylindres, le moule de coulée peut être chargé simultanément à partir de plusieurs points.

5. Machine de coulée sous pression selon la revendication 1, caractérisée en ce que plusieurs outils de coulée sous pression (2, 3, 4) sont disposés l'un à côté de l'autre dans une machine de coulée sous pression (1) et un cylindre de coulée distinct (14, 14', 14") est associé à chaque outil de coulée sous pression (2, 3, 4) pour introduire de la matière à couler dans le moule de coulée qui lui correspond, de sorte que les moules de coulée des plusieurs outils de coulée sous pression (2, 3, 4) peuvent être chargés simultanément.

6. Machine de coulée sous pression selon la revendication 4 ou 5, caractérisée en ce que les plusieurs cylindres de coulée (14, 14', 14", 17, 17', 17") sont retenus dans leur position de façon à pouvoir être déplacés de façon réglable dans au moins une direction de déplacement (19), parallèlement au plan de division des demi-outils de l'outil de coulée sous pression divisible (2, 2', 26, 26', 26") ou des outils de coulée sous pression (2, 3, 4), et à pouvoir être immobilisés dans la position réglée.
